# EUROPEAN PATENT SPECIFICATION

(11) **EP 3 756 516 B1**
(45) Date of publication and mention of the grant of the patent: **27.04.2022**
(21) Application number: 20178611.8
(22) Date of filing: 05.06.2020
(51) Int. Cl.: A47J 31/44, A47J 31/52

(54) **MILK FROTHING APPARATUS AND METHOD OF FROTHING MILK USING SUCH APPARATUS**
MILCHSCHÄUMVORRICHTUNG UND VERFAHREN ZUM ERZEUGEN VON MILCHSCHAUM MIT EINER SOLCHEN MILCHSCHÄUMVORRICHTUNG
DISPOSITIF POUR LE MOUSSAGE DU LAIT ET PROCÉDÉ DE PRODUCTION DE MOUSSE DE LAIT AVEC UN TEL DISPOSITIF

(30) Priority: 17.06.2019 IT 201900009249
(43) Date of publication of application: 30.12.2020
(73) Proprietor: Gruppo Cimbali S.p.A., 20082 Binasco (MI) (IT)
(72) Inventor: Volonté, Claudio, 20082 Binasco MI (IT); Riboli, Matteo, 20082 Binasco MI (IT)
(74) Representative: Perani & Partners S.p.A.

(56) References cited:
- EP-A1- 2 878 241
- EP-A2- 2 025 270
- WO-A1-2016/097923
- WO-A1-2016/177610

## Description

### Field of the invention

The present invention relates to a milk frothing apparatus and a method of frothing milk using such apparatus.

### Background art

Cappuccino is one of the most popular beverages in the world. It is known to consists of a mixture composed of a dose of frothed hot milk and a dose of espresso. Namely, manual frothing of milk requires practice and skill. The bartender who is going to heat and/or froth a specific amount of milk must first select the container, also known as jug, in which the dose of milk to be treated is to be poured. The jug must be carefully selected. Small-volume jugs would be unsuitable because, especially during frothing, there would be the risk of milk overflowing from the container. On the other hand, if the dose of milk to be frothed is not large, i.e. intended for preparation of a single cup, it may happen that too large-volume jugs would not sufficiently cover the bottom end of the wand from which steam is injected. Therefore, the bartender is obliged to add an amount of milk to achieve this condition. Nevertheless, in this case the additional amount of milk is not served by the operator but has only been used to restore the conditions for proper use of the steam wand and must be discarded if not properly stored in a refrigerator. Once the jug has been selected, depending on the amount of milk to be frothed, steam and air intake must be controlled by skillfully moving the jug to obtain the final result of a milk cream in which the liquid phase is not separated from the frothed phase. This is a difficult task that requires practice and skills, which are not often possessed by the young bartender. Even the most skilled bartender, during peak attendance times, can find itself in trouble, not being able to take care of beverage preparation.

For example, EP 1501398 and EP 1776905 disclose a coffee machine equipped with a particular wand designed for automatic milk frothing. The bartender simply needs to fill the jug with the right dose of milk and immersing the wand below the free surface. The bartender actuates automatic frothing via the user interface. Then, an air/steam mixture is delivered from the wand, with steam being supplied by a steam generator and air being supplied by a compressor.

### Problem of the prior art

EP 1501398 and EP 1776905 teach how to improve and simplify the operator's work without eliminating the possibility that the operator may inadvertently use a container that is not suitable for the milk dose to be frothed. WO 2016/097923 discloses a device for heating and frothing milk.

In order to obviate the drawbacks of the prior art, the Applicant has developed an apparatus and a method that can be used for automatic filling of the jug.

### SUMMARY OF THE INVENTION

The object of the present invention is to solve the above discussed prior art problems.

This and other objects are fulfilled by an apparatus as set forth in claim 1, and a method as set forth in claim 13.

### DESCRIPTION OF THE FIGURES

Other characteristics and advantages of the invention will become apparent from the following description, which is given as a non-limiting example, with the help of the figures of the accompanying drawings, in which:

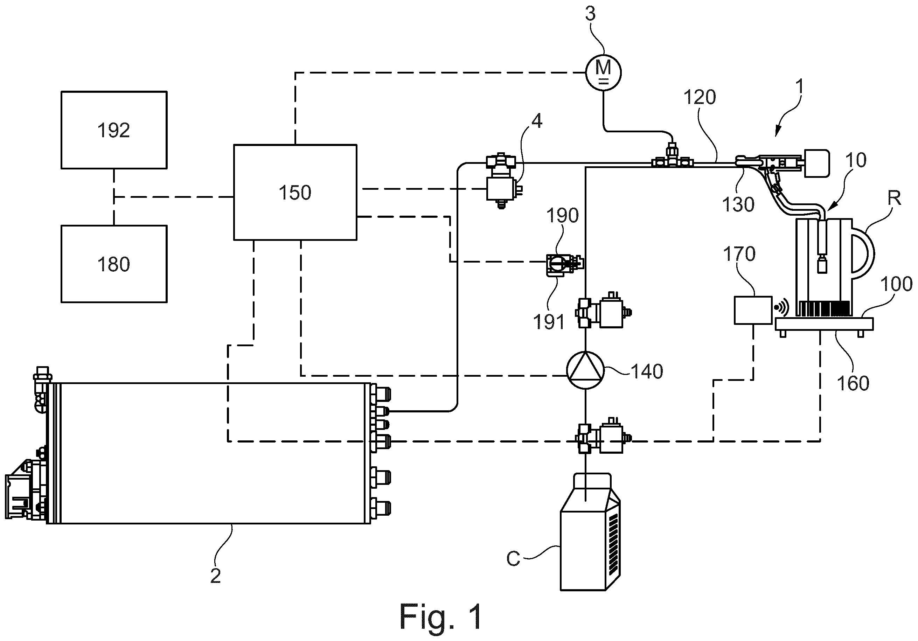

- Figure 1 shows a diagrammatic view of an apparatus of the present invention,
- Figure 2 shows a diagrammatic view of a wand as used in the apparatus of Figure 1,
- Figure 3 shows a detail of Figure 2,
- Figure 4 shows a detail of a wand according to a second different embodiment,
- Figure 5 shows a sectional view of the detail of Figure 4,

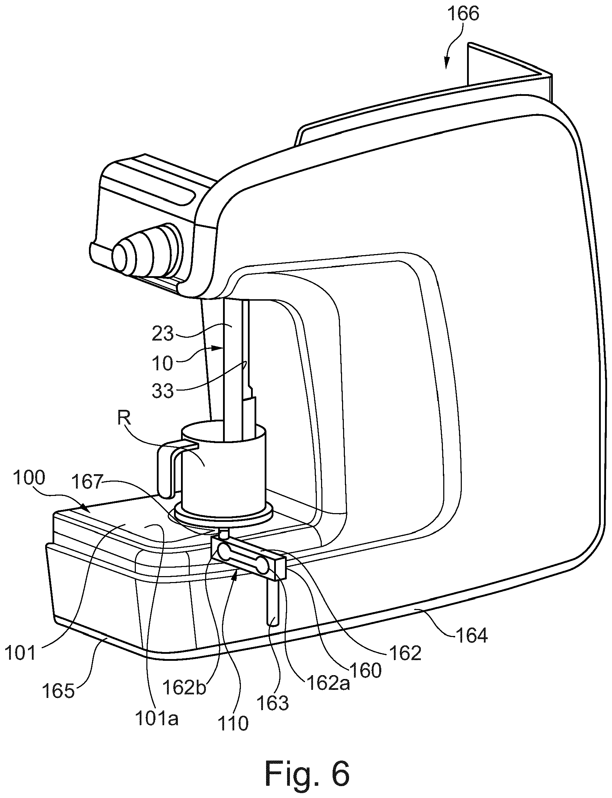

- Figure 6 shows a first embodiment of a coffee machine equipped with the apparatus of Figure 1,

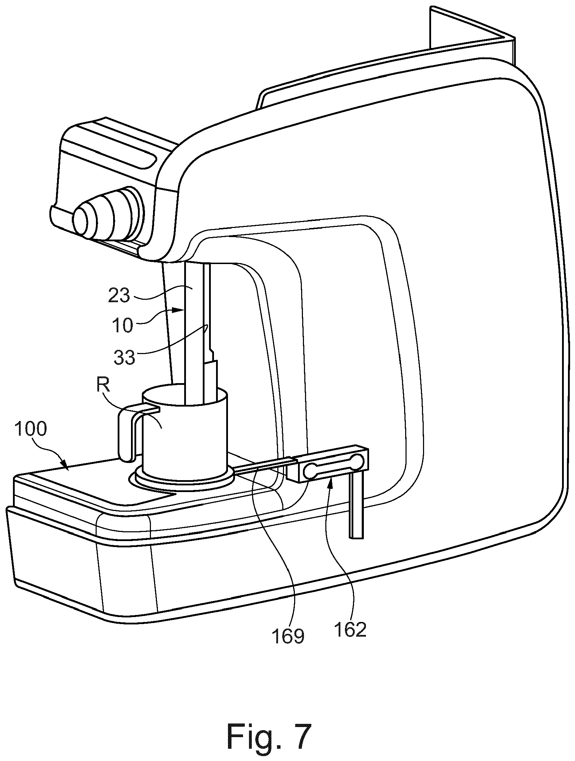

- Figure 7 shows a second embodiment of a coffee machine equipped with the apparatus of Figure 1.

### DETAILED DESCRIPTION

One embodiment of a milk frothing apparatus 1 equipped with a dispensing wand 10 according to the present invention will be described below.

The apparatus 1 comprises a dispensing wand 10, a support element 100 supporting a container R for receiving milk to be frothed, a first delivery conduit 120 for delivering an air-steam mixture, a second delivery conduit 130 for delivering milk, a milk pump 140 for delivering milk to the second conduit 130 and a control unit 150 connected to the pump 140 and configured to control the pump 140.

The dispensing wand 10 comprises the a first channel 20 having a first inlet 21 configured to receive a flow of air-steam mixture from the first delivery conduit 120 and a first outlet 22 configured to dispense the flow of air-steam mixture into the container R.

The dispensing wand 10 further comprises a second channel 30 separated from the first channel 20.

The second channel 30 has a second inlet 31 configured to receive milk to be dispensed from the second delivery conduit 130 and a second outlet 32 configured to dispense the milk into be container R. With this configuration, the wand 10 may be used for controlling, either manually or automatically, as further described below, both milk delivery to the container R and air-steam mixture delivery to the container R.

Therefore, the first delivery conduit 120 is configured to deliver a flow of air-steam mixture to the first inlet 21 of the wand 10 and the second delivery conduit 130 is configured to deliver milk to be frothed to the second inlet 31 of the wand 10.

Preferably, the wand 10 comprises an immersible end 11 designed to be immersed in the container R and a temperature sensor 12 located at the immersible end 12, which is configured to sense the temperature of the milk in the container 11 when the immersible end 11 is immersed in the milk.

Preferably, the immersible end 11 comprises a delivery nozzle configured to deliver a flow of air-steam mixture.

According to one embodiment, the first channel 20 is formed in a first body 23 and the second channel 30 is formed in a second body 33 separate from the first body 23 and attached to the first body 34.

Preferably, the delivery nozzle 11 is removably attached to the first outlet 22 of the first body 23.

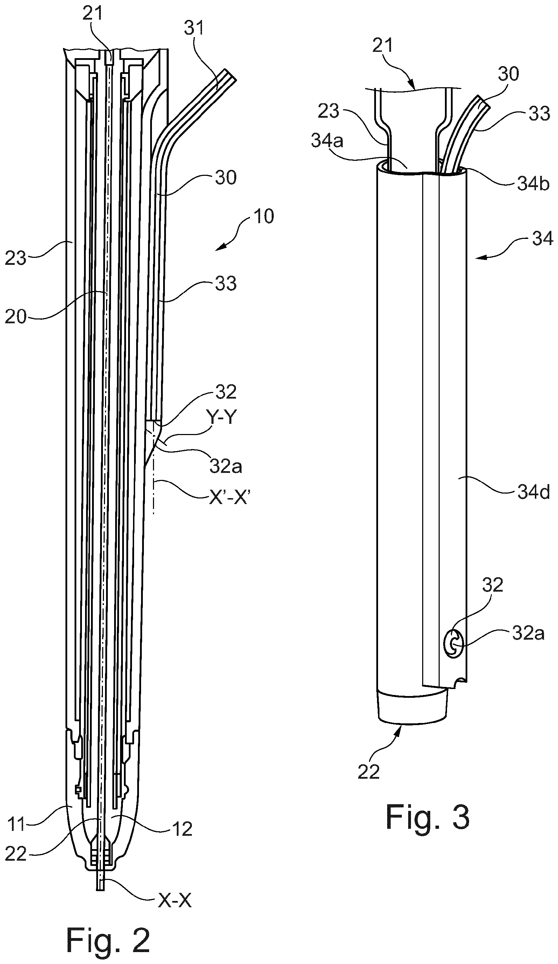

In the example of Figure 2, the first body 23 is defined by a wand body, preferably made of a metal material, for the passage of the flow of air-steam mixture, and the second body 33 is defined by a tube, preferably made of a plastic material, for the passage of milk.

The first body 23 and the second body 33 extend, at least over an end portion thereof, in an axial direction X-X.

Preferably, the wand 10 comprises an attachment member 34 for attaching the second body 33 to the first body 23, and said attachment member 34 at least partially surrounds the first body 23 and at least partly surrounds the second body 33.

According to the embodiment of Figure 3, the attachment member 34 totally surrounds the first body 23 and the second body 33. In this embodiment, the attachment member 34 comprises a first annular channel 34a which is configured to receive and retain the first body 23 and a second annular channel 34b which is configured to receive and retain the second body 33. In order to attach the second body 33 to the first body 23, the first body 23 must be introduced into the first annular channel 34a, after removing and subsequently fixing the delivery nozzle 11, and the second body 33 must be introduced into the second annular channel 34b.

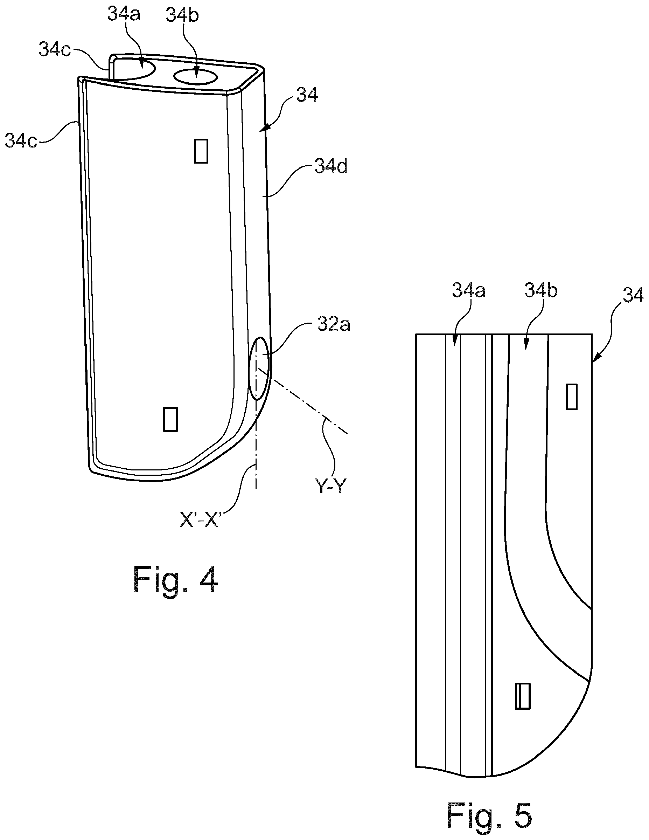

According to the embodiment of Figures 4 and 5, the attachment member 34 totally surrounds the second body 33 and partially surrounds the first body 23 and substantially has a C shape in the axial direction X-X with the C branches extending perpendicular to the axial direction X-X. This will facilitate the attachment and possibly the release of the attachment member 34 from the first body 23. In this embodiment, the first annular channel 34a has an opening which extends laterally in the axial direction X-X between two preferably elastically flexible axial edges 34c, for easier insertion of the first body 23 into the first annular channel 34a. Namely, with the second body 33 immersible in the second annular channel 34b as described with reference to Figure 3, the first body 23 may be pressed in a direction transverse to the axial direction X-X against the two axial edges 34c to introduce the first body 23 into the first annular channel 34a without removing the dispensing nozzle 11.

According to one embodiment, the first body 23 and the second body 33 are removably attached to the attachment member 34. This allows cleaning of the attachment member 34, the first body 23, the second body 33 and the parts of the wand 10 in general.

Preferably, the first body 23 and the second body 33, over their end portion that extends in the axial direction X-X, extend in such axial direction X-X so that, when the wand 10 is immersed in the container R, the distance of the second outlet 32 for milk from the bottom of the container R, and hence from the free surface of the milk, is greater than that of the first outlet 22 for the air-steam mixture which must be immersed in the milk in the container R.

The second outlet 32 for milk is arranged upstream for the first outlet 22 in the axial direction X-X.

In one embodiment, the attachment member 34 comprises at least a portion of thermally insulating material and this portion of thermally insulating material is arranged so as to thermally insulate the first channel 20 from the second channel 30.

Preferably, the second outlet 32 is in fluid communication with a side opening 32a formed in a side wall 34d of the attachment member 34. This allows milk to be delivered in a direction distinct from the axial direction X-X.

The second channel 30 extends over at least a portion upstream from the second outlet 32, in a second direction X'-X' which, in this example, is parallel to the axial direction X-X.

The side opening 32a has an outlet axis Y-Y perpendicular to the side opening 32a. This outlet axis Y-Y forms an angle with the second direction X'-X' which ranges from 35° to 55°, and is preferably 45°.

In an alternative embodiment of the wand 10, not shown, the first channel 20 and the second channel 30 are formed as one piece.

As mentioned above, when the wand 10 is immersed in the container R, the distance of the second outlet 32 for milk from the bottom of the container R, and hence from the free surface of the milk, is greater than that of the first outlet 22 for the air-steam mixture which must be immersed in the milk in the container R. Therefore, the immersible end 11 intended to be immersed in the milk preferably comprises the first outlet 22 for the air-steam mixture.

The temperature sensor 12 is connected to the control unit 150 and the latter is configured to receive the temperature signal generated by the temperature sensor 12 and to stop delivery of the flow of air-steam mixture to the first inlet 21 of the wand 10 according to the temperature signal.

The first delivery conduit 120 for the air-steam mixture is configured to deliver the flow of air-steam mixture to the first inlet 21 of the wand 10 and the second delivery conduit 130 for milk is configured to deliver milk to be frothed to the second inlet 31 of the wand 10.

The pump 140 is configured to draw milk, preferably from a milk container C, and is connected to the second delivery conduit 130 for delivering the milk that has been drawn by the pump 140 into the second delivery conduit 130.

The control unit 150 is connected to the pump 140 to control the pump 140.

Namely, with the wand 10, the control unit 150 may be used to either manually or automatically direct the pump 140 to manually or automatically fill milk into the container R and to use the same wand for later frothing the milk dispensed in the container R by actuating the flow of air-steam mixture.

It shall be noted that each connection between devices as disclosed herein may be wired or wireless, for example a Wi-Fi or Bluetooth connection.

The support element 100 comprises a support plate 101 having a top surface 101a designed to support the container R.

According to a first embodiment, the apparatus 1 comprises a sensor device 110 which is configured to generate a sensor signal S1 representative of the weight of the container R and a control unit 150 connected to the sensor device 110 and to the pump 140 and configured to receive the sensor signal generated by the sensor device and to control the pump 140 as a function of the sensor signal S1.

In one embodiment, the sensor device 110 comprises a weighing device 160 coupled to the support plate 101 and is configured to generate a weight signal Sp representative of the weight of the container R and is connected to the control unit 150 to send the weight signal to the control unit 150 SP.

The weighing device 160 may comprise a weight transducer, such as a capacitive sensor or a dynamometric element, which is configured to generate a weight signal Sp representative of the measured weight.

According to a first embodiment, the weighing device 160 comprises a load cell 162 having a first threaded end 162a and a second threaded end 162b. The first threaded end 162a is threadingly coupled with a first bracket 163 connected to a stationary structure 164, here the base 165 of a coffee machine 166 equipped with the apparatus 1. The second threaded end 162b is threadingly coupled with a second bracket 167 which is preferably removably coupled to the support plate 101. Preferably, the coffee machine 166 comprises a cup support base 168 and the first bracket 163 and the second bracket 167 are configured to cause the support plate 101 for the container R to be coplanar with the cup support base 168. In this first embodiment, the load cell 162 is arranged below the support plate 101 in the front portion of the coffee machine 166.

According to a second embodiment, the load cell 162 is located in the rear portion of the coffee machine 166 and is connected to the support plate 101 via a connection member 169, here a push rod.

According to a third embodiment, the weighing device 160 and the weighing element 101 are formed as a single device which generates the weight signal Sp.

In one embodiment provided as an alternative to the weighing device, the sensor device 110 comprises a code reading device 170, which preferably reads barcodes or QR codes, and the sensor signal comprises a reading signal Sr generated by the code reading device and representative of the weight of the empty container. This embodiment is applicable when the container R has a code that can be read by a code reading device, such as a bar code or a QR code.

In particular, the weight of the empty container R is associated with a predetermined amount of milk Q and the control unit 150 is configured to stop the pump 140 upon attainment of the predetermined amount of milk Q as defined by the sensor signal generated with the empty container R, i.e. either the weight signal Sp or the reading signal Sr.

Preferably, a memory unit 180 is provided, which stores, for each container R of a plurality of containers R, a corresponding amount of milk Q, the weight of the empty container R and the code of the container R, if any.

In a further embodiment, both the weighing device 110 and the code reading device 170 are provided. When the container R is placed on the support element 101, the code reading device 170 reads the code of the container R and the amount of milk Q associated with the container R whose code has been read is determined. If the measured weight of container R, which is assumed to be empty, is different from that obtained from the code that has been read, and the measured weight is greater than that associated with the code that has been read, then the container R still has milk therein and the control unit 150 controls the pump 140 so that milk is dispensed into the container R until the weight of the container R, with the milk therein, reaches the milk amount value Q associated with the container R.

According to one embodiment, preferably provided as an alternative to the weighing device 110 but compatible with the code reading device 170, the apparatus 1 comprises a measuring device 190 connected to the control unit 150 and configured to generate a measurement signal Sm representative of the amount of milk delivered by the pump 140.

In a first embodiment, the measuring device 190 comprises a flow meter 191, which is configured to measure the flow rate of the milk delivered by the pump 140 to the container R. A calibration step is provided for calibrating the apparatus 1 is provided, in which an operator places the container R under the wand 10 and starts the dispensing operation. The control unit 150 actuates the pump 140 and when the operator judges that the milk in the container has attained the desired level, he/she stops the dispensing operation by stopping the pump 140. The amount of milk Q delivered by the pump 140 into the container R is measured by the flow meter 191 and stored in the memory unit 180.

In a second embodiment, the measuring device 190 comprises a time counter 192 configured to measure a pump working time 140. This embodiment also includes a calibration step for calibrating the apparatus 1, in which an operator places the container R under the wand 10 and starts the dispensing operation. The control unit 150 actuates the pump 140 and when the operator judges that the milk in the container has attained the desired level, he/she stops the dispensing operation by stopping the pump 140. The working time of the pump 140 is stored in the memory unit 180 and may be retrieved when filling a container with a code that can be read by a code reading device, preferably using the code reading device 170.

Alternatively, the operator may store, during calibration, an amount of milk, a weight or a working time of the pump 140, for a number of different containers R, and retrieve the stored values, via suitable user interface, to fill the desired container R with the amount of milk Q associated with said container R.

Therefore, the invention generally relates to a method of frothing milk using the apparatus 1 and the wand 10 and comprises the steps of placing an empty container R on the support element 101, recognizing the container R and deriving a predetermined amount of milk Q for the container R in response to the recognition of the container, actuating the milk delivery pump 140 and measuring a parameter representative of the amount of milk delivered by the pump 140, stopping the pump 140 according to the comparison between the measured parameter and the derived predetermined amount and, finally, introducing the flow of air-steam mixture into the container R to froth the milk in the container R.

Recognizing the container may be carried out by measuring the weight or reading the code as described above or may be achieved by means of data entered by the operator.

The measured parameter may be the weight of the vessel R, the flow rate of milk delivered by the pump 140 or the working time of the pump 140.

The flow of air-steam mixture is preferably generated as described in EP 1501398 and EP 1776905.

Namely, the apparatus 1 comprises a steam generator 2 and a compressor 3 configured to generate pressurized air. The steam generator 2 is connected to a valve 4 which controls delivery of steam to the first delivery conduit 120. The compressor 3 is also connected to the first delivery duct 120 and is therefore configured to deliver pressurized air into the first delivery conduit 120.

When the first delivery duct 120 has to be supplied with a flow of air-steam mixture, the control unit 150 sets the valve 4 to the open position for steam delivery and actuates compressor 3 for pressurized air delivery.

When the temperature sensed by the temperature sensor 12 attains a predetermined value, the control unit 150 sets the valve 4 to the closed position to stop steam delivery, and stops the compressor 3 to stop air delivery, thereby stopping delivery of the flow of air-steam mixture to the first delivery conduit 120.

## Claims

1. A milk frothing apparatus (1) comprising:
- a dispensing wand (10) which comprises a first channel (20) having a first inlet (21) configured to receive a flow of air-steam mixture from a first delivery conduit (120) and a first outlet (22) configured to dispense the flow of air-steam mixture into a container (R) designed to receive milk to be frothed, and a second channel (30) separated from the first channel (20) and having a second inlet (31) configured to receive milk to be dispensed from a second delivery conduit (130) and a second outlet (32) configured to dispense the milk into said container (R),
- a support element (100) for supporting the container (R) designed to receive the milk to be frothed,
- a first delivery conduit (120) configured to deliver a flow of air-steam mixture to the first inlet (21) of the wand (10), the apparatus being **characterized by**:
- a second delivery conduit (130) configured to deliver milk to be frothed to the second inlet (31) of the wand (10),
- a pump (140) configured to draw milk, and connected to the second delivery conduit (130) for delivering the milk that has been drawn by the pump (140) into the second delivery conduit (130),
- a control unit (150) connected to the pump (140) and configured to control the pump (140).

2. An apparatus (1) as claimed in claim 1, comprising:
- a sensor device (110) configured to generate a sensor signal representative of the weight of the container,
- the control unit (150) being connected to the sensor device (110) and to the pump (140) and being configured to receive the sensor signal generated by the sensor device (110) and to control the pump (140) as a function of the sensor signal.

3. An apparatus (1) as claimed in claim 2, wherein:
- the sensor device (110) comprises a weighing device (160) coupled to the support element (100), and the sensor signal comprises a weight signal generated by the weighing device and representative of the weight of the container.

4. An apparatus (1) as claimed in claim 2, wherein:
- the sensor device (110) comprises a code reading device (170) and the sensor signal comprises a reading signal generated by the code reading device and representative of the weight of the empty container.

5. An apparatus as claimed in any of claims 2 to 4, wherein:
- the weight of the empty container (R) is associated with a predetermined amount of milk,
- the control unit (150) is configured to stop the pump (140) when reaching the predetermined amount of milk defined by the sensor signal generated with the empty container.

6. An apparatus (1) as claimed in any of claims 1 to 5,
comprising a measuring device (190) connected to the control unit (150) and configured to generate a measurement signal representative of the amount of milk delivered by the pump (140).

7. An apparatus (1) as claimed in claim 6, wherein:
- the measuring device (140) comprises a flow meter (191) which is configured to measure the flow rate of the milk delivered by the pump (140).

8. An apparatus (1) as claimed in claim 6, wherein:
- the measuring device (190) comprises a time counter (192) configured to measure a pump working time (140).

9. An apparatus as claimed in any of claims 1 to 8, wherein:
- the wand (10) comprises:
- an immersible end (11) which is designed to be immersed in the container,
- a temperature sensor (12) arranged at the immersible end, and configured to sense the temperature of the milk in the container when the immersible end is immersed in the milk and to generate a temperature signal representative of the milk temperature being sensed;
- the control unit (140) is connected to the temperature sensor (12) and is configured to receive the temperature signal generated by the temperature sensor and to stop delivery of the flow of air-steam mixture to the first inlet (21) of the wand (10) according to the temperature signal.

10. An apparatus as claimed in any of claims 1 to 9, wherein the first channel (20) is formed in a first body (23) and the second channel (30) is formed in a second body (33) separate from the first body (23) and attached to the first body (23) through an attachment member (34).

11. An apparatus as claimed in claim 10, wherein:
- the attachment member (34) comprises at least one portion made of a heat-insulating material,
- the portion made of a heat-insulating material is arranged in such a position as to thermally insulate the first channel (20) from the second channel (30).

12. An apparatus as claimed in any of claims 1 to 11, wherein the first channel (20) and the second channel (30) are formed in a single body.

13. A method of frothing milk using an apparatus (1) as claimed in any of claims 1 to 12, the method comprising the steps of:
- placing an empty container (R) on the support element (100),
- recognizing the container and derive a predetermined amount of milk for the container in response to such recognition of the container,
- actuating the milk delivery pump (140),
- measuring a parameter representative of the amount of milk delivered by the pump (140),
- stopping the pump (140) according to the comparison between the measured parameter and the derived predetermined amount,
- introducing the flow of air-steam mixture into the container to froth the milk in the container.

14. A method as claimed in claim 13, wherein the step of measuring a parameter representative of the amount of milk delivered by the pump comprises the step of measuring the flow rate of the milk delivered by the pump (140).

15. A method as claimed in claim 13, wherein the step of measuring a parameter representative of the amount of milk delivered by the pump comprises the step of measuring a pump working time (140).

## Patentansprüche

1. Milchaufschäumvorrichtung (1), umfassend:
- einen Ausgabestab (10), der einen ersten Kanal (20) mit einem ersten Einlass (21), der so konfiguriert ist, dass er einen Strom von Luft-Dampf-Gemisch aus einer ersten Zuführungsleitung (120) aufnimmt, und einen ersten Auslass (22) umfasst, der so konfiguriert ist, dass er den Strom von Luft-Dampf-Gemisch in einen Behälter (R) abgibt, der zur Aufnahme von aufzuschäumender Milch bestimmt ist, und einen zweiten Kanal (30), der von dem ersten Kanal (20) getrennt ist und einen zweiten Einlass (31) aufweist, der so konfiguriert ist, dass er von einer zweiten Zuführungsleitung (130) auszugebende Milch aufnimmt, und einen zweiten Auslass (32), der so konfiguriert ist, dass er die Milch in den Behälter (R) ausgibt,
- ein Stützelement (100) zum Abstützen des Behälters (R), der dazu bestimmt ist, die aufzuschäumende Milch aufzunehmen,
- eine erste Zuführungsleitung (120), die so konfiguriert ist, dass sie einen Strom von Luft-Dampf-Gemisch an den ersten Einlass (21) des Stabes (10) liefert, wobei die Vorrichtung **gekennzeichnet ist durch**:
- eine zweite Zuführungsleitung (130), die so konfiguriert ist, dass sie aufzuschäumende Milch an den zweiten Einlass (31) des Stabs (10) liefert,
- eine zum Ansaugen von Milch konfigurierte Pumpe (140), die mit der zweiten Zuführungsleitung (130) verbunden ist, um die von der Pumpe (140) angesaugte Milch in die zweite Zuführungsleitung (130) zu leiten,
- eine Steuerungseinheit (150), die mit der Pumpe (140) verbunden und zur Steuerung der Pumpe (140) konfiguriert ist.

2. Vorrichtung (1) nach Anspruch 1, umfassend:
- eine Sensorvorrichtung (110), die so konfiguriert ist, dass sie ein Sensorsignal erzeugt, das für das Gewicht des Behälters repräsentativ ist,
- die Steuerungseinheit (150), die mit der Sensorvorrichtung (110) und der Pumpe (140) verbunden und so konfiguriert ist, dass sie das von der Sensorvorrichtung (110) erzeugte Sensorsignal empfängt und die Pumpe (140) in Abhängigkeit von dem Sensorsignal steuert.

3. Vorrichtung (1) nach Anspruch 2, wobei:
- die Sensorvorrichtung (110) eine mit dem Stützelement (100) gekoppelte Wiegevorrichtung (160) umfasst und das Sensorsignal ein von der Wiegevorrichtung erzeugtes und für das Gewicht des Behälters repräsentatives Gewichtssignal umfasst.

4. Vorrichtung (1) nach Anspruch 2, wobei:
- die Sensorvorrichtung (110) eine Code-Lesevorrichtung (170) umfasst und das Sensorsignal ein Lesesignal umfasst, das von der Code-Lesevorrichtung erzeugt wird und für das Gewicht des leeren Behälters repräsentativ ist:

5. Vorrichtung nach einem der Ansprüche 2 bis 4, wobei:
- das Gewicht des leeren Behälters (R) mit einer vorbestimmten Menge Milch verbunden ist,
- die Steuerungseinheit (150) so konfiguriert ist, dass sie die Pumpe (140) anhält, wenn die vorbestimmte Milchmenge erreicht ist, die durch das mit dem leeren Behälter erzeugte Sensorsignal gebildet wird.

6. Vorrichtung (1) nach einem der Ansprüche 1 bis 5,
mit einer Messvorrichtung (190), die mit der Steuerungseinheit (150) verbunden und so konfiguriert ist, dass sie ein Messsignal erzeugt, das die von der Pumpe (140) geförderte Milchmenge darstellt.

7. Vorrichtung (1) nach Anspruch 6, wobei:
- die Messvorrichtung (140) einen Durchflussmesser (191) umfasst, der so konfiguriert ist, dass er die Durchflussrate der von der Pumpe (140) geförderten Milch misst.

8. Vorrichtung (1) nach Anspruch 6, wobei:
- die Messvorrichtung (190) einen Zeitzähler (192) umfasst, der so konfiguriert ist, dass er eine Pumpenbetriebszeit (140) misst.

9. Vorrichtung nach einem der Ansprüche 1 bis 8, wobei:
- der Stab (10) umfasst:
- ein eintauchbares Ende (11), das dazu ausgelegt ist, in den Behälter eingetaucht zu werden,
- einen am eintauchbaren Ende angeordneten Temperatursensor (12), der so konfiguriert ist, dass er die Temperatur der Milch im Behälter erfasst, wenn das eintauchbare Ende in die Milch eingetaucht ist, und ein für die erfasste Milchtemperatur repräsentatives Temperatursignal erzeugt;
- die Steuerungseinheit (140) mit dem Temperatursensor (12) verbunden und so konfiguriert ist, dass sie das von dem Temperatursensor erzeugte Temperatursignal empfängt und die Zufuhr des Stroms des Luft-Dampf-Gemischs zum ersten Einlass (21) des Stabs (10) entsprechend dem Temperatursignal stoppt.

10. Vorrichtung nach einem der Ansprüche 1 bis 9, wobei der erste Kanal (20) in einem ersten Körper (23) ausgebildet ist und der zweite Kanal (30) in einem zweiten Körper (33) ausgebildet ist, der von dem ersten Körper (23) getrennt ist und an dem ersten Körper (23) durch ein Befestigungselement (34) befestigt ist.

11. Vorrichtung nach Anspruch 10, wobei:
- das Befestigungselement (34) mindestens einen Abschnitt aus einem wärmeisolierenden Material umfasst,
- der Abschnitt aus einem wärmeisolierenden Material in einer solchen Position angeordnet ist, dass der erste Kanal (20) von dem zweiten Kanal (30) thermisch isoliert ist.

12. Gerät nach einem der Ansprüche 1 bis 11, wobei der erste Kanal (20) und der zweite Kanal (30) in einem einzigen Körper ausgebildet sind.

13. Verfahren zum Aufschäumen von Milch anhand einer Vorrichtung (1) nach einem der Ansprüche 1 bis 12, wobei das Verfahren die folgenden Stufen umfasst:
- Aufsetzen eines leeren Behälters (R) auf das Stützelement (100),
- Erkennen des Behälters und Ableiten einer vorbestimmten Milchmenge für den Behälter als Reaktion auf eine derartige Erkennung des Behälters,
- Betätigen der Milchabgabepumpe (140),
- das Messen eines Parameters, der für die von der Pumpe (140) geförderte Milchmenge repräsentativ ist,
- das Anhalten der Pumpe (140) entsprechend dem Vergleich zwischen dem gemessenen Parameter und der abgeleiteten vorbestimmten Menge,
- Einleiten des Luft-Dampf-Gemisches in den Behälter, um die Milch in dem Behälter aufzuschäumen.

14. Verfahren nach Anspruch 13, wobei die Stufe der Messung eines Parameters, der für die von der Pumpe geförderte Milchmenge repräsentativ ist, die Stufe der Messung der Durchflussrate der von der Pumpe (140) geförderten Milch umfasst.

15. Verfahren nach Anspruch 13, wobei die Stufe des Messens eines Parameters, der für die von der Pumpe geförderte Milchmenge repräsentativ ist, die Stufe des Messens einer Pumpenbetriebszeit (140) umfasst.

## Revendications

1. Appareil de formation de mousse de lait (1), comprenant :
- une buse de distribution (10) qui comprend un premier canal (20) ayant une première entrée (21) configurée pour recevoir un écoulement de mélange air-vapeur provenant d'un premier conduit de distribution (120) et une première sortie (22) configurée pour distribuer l'écoulement de mélange air-vapeur dans un récipient (R) conçu pour recevoir du lait à faire mousser, et un second canal (30) séparé du premier canal (20) et ayant une seconde entrée (31) configurée pour recevoir du lait à distribuer à partir d'un second conduit de distribution (130) et une seconde sortie (32) configurée pour distribuer le lait dans ledit récipient (R),
- un élément de support (100) pour supporter le récipient (R) destiné à recevoir le lait à faire mousser,
- un premier conduit de distribution (120) configuré pour distribuer un écoulement de mélange air-vapeur à la première entrée (21) de la buse (10), l'appareil étant **caractérisé par** :
- un second conduit de distribution (130) configuré pour distribuer du lait à faire mousser à la seconde entrée (31) de la buse (10),
- une pompe (140) configurée pour aspirer du lait, et reliée au second conduit de distribution (130) pour distribuer le lait qui a été aspiré par la pompe (140) dans le second conduit de distribution (130),
- une unité de commande (150) reliée à la pompe (140) et configurée pour commander la pompe (140).

2. Appareil (1) selon la revendication 1, dans lequel :
- un dispositif capteur (110) configuré pour générer un signal de capteur représentatif du poids du récipient,
- l'unité de commande (150) étant connectée au dispositif capteur (110) et à la pompe (140) et étant configurée pour recevoir le signal de capteur généré par le dispositif capteur (110) et pour commander la pompe (140) en fonction du signal de capteur.

3. Appareil (1) selon la revendication 2, dans lequel :
- le dispositif capteur (110) comprend un dispositif de pesage (160) couplé à l'élément de support (100), et le signal de capteur comprend un signal de poids généré par le dispositif de pesage et représentatif du poids du récipient.

4. Appareil (1) selon la revendication 2, où :
- le dispositif capteur (110) comprend un dispositif de lecture de code (170) et le signal de capteur comprend un signal de lecture généré par le dispositif de lecture de code et représentatif du poids du récipient vide.

5. Appareil selon l'une quelconque des revendications 2 à 4, dans lequel :
- le poids du récipient vide (R) est associé à une quantité prédéterminée de lait,
- l'unité de commande (150) est configurée pour arrêter la pompe (140) lorsqu'elle atteint la quantité prédéterminée de lait définie par le signal de capteur généré avec le récipient vide.

6. Appareil (1) selon l'une quelconque des revendications 1 à 5,
comprenant un dispositif de mesure (190) connecté à l'unité de commande (150) et configuré pour générer un signal de mesure représentatif de la quantité de lait distribuée par la pompe (140).

7. Appareil (1) selon la revendication 6, où :
- le dispositif de mesure (140) comprend un débitmètre (191) qui est configuré pour mesurer le débit du lait distribué par la pompe (140).

8. Appareil (1) selon la revendication 6, où :
- le dispositif de mesure (190) comprend un compteur de temps (192) configuré pour mesurer un temps de fonctionnement de la pompe (140).

9. Appareil selon l'une quelconque des revendications 1 à 8, dans lequel :
- la buse (10) comprend :
- une extrémité immergeable (11) qui est conçue pour être immergée dans le récipient,
- un capteur de température (12) disposé à l'extrémité immergeable, et configuré pour capter la température du lait dans le récipient lorsque l'extrémité immergeable est immergée dans le lait et pour générer un signal de température représentatif de la température du lait captée ;
- l'unité de commande (140) est connectée au capteur de température (12) et est configurée pour recevoir le signal de température généré par le capteur de température et pour arrêter la distribution de l'écoulement de mélange air-vapeur à la première entrée (21) de la buse (10) en fonction du signal de température.

10. Appareil selon l'une quelconque des revendications 1 à 9, dans lequel le premier canal (20) est formé dans un premier corps (23) et le second canal (30) est formé dans un second corps (33) séparé du premier corps (23) et fixé au premier corps (23) par l'intermédiaire d'un élément de fixation (34).

11. Appareil selon la revendication 10, dans lequel :
- l'élément de fixation (34) comprend au moins une partie faite d'un matériau thermoisolant,
- la partie faite d'un matériau thermoisolant est agencée dans une position de manière à isoler thermiquement le premier canal (20) du second canal (30).

12. Appareil selon l'une quelconque des revendications 1 à 11, dans lequel le premier canal (20) et le second canal (30) sont formés d'un seul tenant.

13. Procédé de formation de mousse de lait à l'aide d'un appareil (1) selon l'une quelconque des revendications 1 à 12, le procédé comprenant les étapes consistant à :
- placer un récipient vide (R) sur l'élément de support (100),
- identifier le récipient et obtenir une quantité prédéterminée de lait pour le récipient en réponse à l'identification du récipient,
- actionner la pompe de distribution de lait (140),
- mesurer un paramètre représentatif de la quantité de lait distribuée par la pompe (140),
- arrêter la pompe (140) en fonction de la comparaison entre le paramètre mesuré et la quantité prédéterminée obtenue,
- introduire l'écoulement de mélange air-vapeur dans le récipient pour faire mousser le lait dans le récipient.

14. Procédé selon la revendication 13, dans lequel l'étape consistant à mesurer un paramètre représentatif de la quantité de lait distribuée par la pompe comprend l'étape consistant à mesurer le débit du lait distribué par la pompe (140).

15. Procédé selon la revendication 13, dans lequel l'étape consistant à mesurer un paramètre représentatif de la quantité de lait distribuée par la pompe comprend l'étape consistant à mesurer le temps de fonctionnement de la pompe (140).
